# EUROPÄISCHE PATENTSCHRIFT

(11) **EP 2 565 688 B1**
(45) Veröffentlichungstag und Bekanntmachung des Hinweises auf die Patenterteilung: **09.12.2015**
(21) Anmeldenummer: 12005333.5
(22) Anmeldetag: 20.07.2012
(51) Int. Cl.: G02B 6/00, B60Q 3/02, B60Q 3/00

(54) **Beleuchtungsvorrichtung zum Erzeugen eines Leuchtstreifens sowie Kraftwagen**
Lighting device to generate a lighting strip and motor vehicle
Dispositif d'éclairage destiné à générer un nuage lumineux ainsi que véhicule automobile

(30) Priorität: 02.09.2011 DE 102011112321
(43) Veröffentlichungstag der Anmeldung: 06.03.2013
(73) Patentinhaber: AUDI AG, 85045 Ingolstadt (DE)
(72) Erfinder: Pfeil, Marcus, 90610 Winkelhaid (DE)
(74) Vertreter: Thielmann, Frank

(56) Entgegenhaltungen:
- EP-A2- 1 903 359
- WO-A1-2012/130497
- DE-A1- 10 139 578
- DE-A1-102004 052 893
- DE-A1-102008 008 180
- DE-A1-102008 015 561
- DE-A1-102009 039 556
- US-A- 5 857 758
- US-A1- 2003 006 230
- US-A1- 2003 026 106

## Beschreibung

Die Erfindung betrifft eine Beleuchtungsvorrichtung zum Erzeugen eines Leuchtstreifens entlang einer vorgegebenen Strecke sowie einen Kraftwagen, der von dieser Beleuchtungsvorrichtung wenigstens eine aufweist.

Um es einer Person zu ermöglichen, sich im Innenraum eines Kraftwagens auch im Dunkeln zu orientieren, kann vorgesehen sein, in einzelnen Funktionselementen, wie z.B. einem Becherhalter (Cupholder) oder einem Lautsprecher, mit einer Lichtquelle von innen heraus zu beleuchten. Die Person kann dann erkennen, wo sich das Funktionselement im Innenraum befindet, ohne dass der gesamte Innenraum hell erleuchtet sein muss. Die oben erwähnte Beleuchtungsvorrichtung ermöglicht es dabei, Licht einer Lichtquelle entlang einer Kontur des jeweiligen Funktionselements zu verteilen, so dass die Kontur im Dunkeln als leuchtender Streifen erkennbar ist. Typischerweise wird eine solche Beleuchtungsvorrichtung für eine umlaufende Beleuchtungen verwendet, d.h. der Leuchtstreifen weist hier die Form eines geschlossenen Bandes auf.

Zum Erzeugen eines umlaufenden Leuchtstreifens kann ein ringförmiger Lichtleiter aus Polymethylmethacrylat (PMMA, Plexiglas ®) verwendet werden, in den mittels zweier Leuchtdioden an zwei Enden Licht eingekoppelt wird. Der Lichtleiter weist hierbei die Form der darzustellenden Kontur auf und kann z.B. mittels einer Verrastung an dem Bauteil oder um dieses herum fixiert sein. Die Leuchtdioden können jeweils in einem Einkoppelelement eingebaut sein, in dem sich eine elektrische Schaltung zum Betreiben der Leuchtdiode befindet und durch welches das Licht der Leuchtdioden gebündelt und auf eine Einkoppelfläche des Lichtleiters gerichtet wird.

Entlang seiner Längserstreckung in Verlaufsrichtung der Kontur weist der Lichtleiter Streuzentren auf, also z.B. Einkerbungen an seiner Außenwandung oder reflektierende Partikel in seinem Inneren, durch welche jeweils ein Teil des Lichts umgelenkt wird und aus dem Lichtleiter austritt. Hierdurch verteilt sich das Licht der Leuchtdioden entlang der Strecke. Der Lichtleiter erscheint dadurch entlang der Kontur gleichmäßig hell. Mittels eines solchen Lichtleiters kann dabei typischerweise eine Fläche von bis zu 200 mm x 150 mm mit einem gleichmäßig hellen Leuchtstreifen umgeben werden.

Soll eine größere Fläche mit einem umlaufenden Leuchtstreifen umgeben werden, muss der Lichtleiter entsprechend lang sein. Hierbei ergibt sich das Problem, dass thermisch bedingte Längenänderungen des Lichtleiters in dessen Material eine mechanische Spannung verursachen können, die zu Haarrissen in dem Material oder sogar zur Zerstörung des Lichtleiters führen kann. Insbesondere bei einem Kraftwagen können sich in dessen Innenraum unter Umständen Temperaturen von -40 °C bis +80°C ergeben.

In der US 5,857,758 ist ein Beleuchtungssystem zum Beleuchten eines Fahrgastraumes eines Busses beschrieben. Das Licht elektrischer Lichtquellen wird mittels massiver Lichtleiter in einem Lampengehäuse verteilt. Jeweils zwei der Lichtleiter werden durch eine Koppeleinrichtung optisch gekoppelt. Hierzu sind Stirnseiten der Enden der Lichtleiter einander gegenüber gehalten. Die beiden Enden sind dabei beabstandet zueinander angeordnet, um eine Längenänderung der Lichtleiter bei einer Veränderung der Temperatur kompensieren zu können.

In der DE 10 2004 052 893 A1 ist ein Zeigerinstrument für einen Kraftwagen beschrieben, bei welchem ein Licht abstrahlender Zeiger entlang seiner Längserstreckung zwei Abstrahlbereiche aufweist, von welchen aus Licht unterschiedlicher Lichtquellen von dem Zeiger abstrahlbar ist. Die beiden Austrittsbereiche sind mit den jeweiligen Lichtquellen über Lichtleiter gekoppelt. Um das Licht von einer der Lichtquellen zu dem Lichtaustrittsbereich am äußeren Ende des Zeigers hinter dem anderen Austrittsbereich entlang führen zu können, weist der zum äußeren Austrittsbereich führende Lichtleiter einen gekröpften Bereich auf.

Es ist Aufgabe der vorliegenden Erfindung, eine Beleuchtungsvorrichtung bereitzustellen, mittels welcher entlang einer Kontur eines großflächigen Funktionselements ein gleichmäßig heller Leuchtstreifen erzeugbar ist. Insbesondere soll auch bei einem Kraftwagen ein Leuchtstreifen der genannten Art erzeugbar sein.

Die Aufgabe wird durch eine Beleuchtungsvorrichtung gemäß Anspruch 1 sowie durch einen Kraftwagen gemäß Anspruch 9 gelöst. Vorteilhafte Weiterbildungen der erfindungsgemäßen Beleuchtungsvorrichtung und des erfindungsgemäßen Kraftwagens sind durch die Unteransprüche gegeben.

Mittels der erfindungsgemäßen Beleuchtungsvorrichtung lässt sich ein Leuchtstreifen entlang einer vorgegebenen Strecke erzeugen. Dazu wird entlang unterschiedlicher Abschnitte dieser Strecke Licht mittels jeweils eines Lichtleiters verteilt. Jeweils zwei dieser Lichtleiter überschneiden sich dabei an ihren Enden entlang eines Verlaufs der Strecke. Mit anderen Worten ist bei der erfindungsgemäßen Beleuchtungsvorrichtung Licht einer ersten Lichtquelle entlang eines ersten Abschnitts der Strecke mittels eines ersten Lichtleiters bis zu einem Endbereich desselben und Licht einer zweiten Lichtquelle entlang eines zweiten Abschnitts der Strecke mittels eines zweiten Lichtleiters bis zu einem Endbereich dieses Lichtleiters verteilbar. Hierbei sind die beiden Endbereiche entlang der Strecke nebeneinander angeordnet.

Die erfindungsgemäße Beleuchtungsvorrichtung weist den Vorteil auf, dass sich ein durchgängiger Leuchtstreifen auch entlang einer verhältnismäßig langen Strecke, also z.B. einer Kante eines Armaturenbretts oder an einer Einfassung für ein Schiebedach, erzeugen lässt. Mit einem durchgängigen Leuchtstreifen ist hierbei ein entlang der Strecke von innen her gleichmäßig hell erleuchteter streifenförmiger Bereich einer Oberflächen gemeint. Mit einem gleichmäßig hellen Leuchtstreifen ist hier gemeint, dass sich Helligkeitswerte des Leuchtstreifens entlang der Strecke nur so weit unterschieden, dass eine Person die Unterschiede in der Helligkeit nicht wahrnimmt.

Um die Endbereiche der Lichtleiter einfach nebeneinander anordnen zu können, weist einer der Lichtleiter in seinem Endbereich eine gekröpfte Form auf. Dann können die beiden Endbereiche in Bezug auf eine Betrachtungsrichtung, aus welcher ein Betrachter den Leuchtstreifen betrachtet, hintereinander angeordnet werden. So ergibt sich ein gleichmäßig breiter Leuchtstreifen. Die beiden Lichteiter können in ihren Endbereichen dazu auch ineinander gesteckt sein.

Indem die Endbereiche der beiden Lichtleiter nicht mit jeweiligen Stirnseiten aneinander anliegend angeordnet sind, sondern versetzt nebeneinander, ist vermieden, dass die beiden Lichtleiter mechanischen Druck aufeinander ausüben, falls sie sich aufgrund einer hohen Temperatur ausdehnen. Genauso ist vermieden, dass der Leuchtstreifen unterbrochen ist, falls sich die Lichtleiter bei einer sehr tiefen Temperatur so weit zusammengezogen haben, dass ihre jeweilige Gesamtlänge kleiner als bei Zimmertemperatur ist. Schließlich ergibt sich der Vorteil, dass die beiden Lichtleiter mit größeren Toleranzen bei den Längenmaßen gefertigt werden können, wodurch sich die Fertigungskosten für die Beleuchtungsvorrichtung verringern lassen.

Die beiden Endbereiche der Lichtleiter sind in eine Verlaufsrichtung der Strecke gegeneinander beweglich gelagert. Dadurch ist vermieden, dass eine mechanische Spannung entlang der Verlaufsrichtung der Strecke in den jeweiligen Lichtleitern bei einer thermisch bedingten Längenänderung ein vorgebbares Maß übersteigt.

Das Licht der beiden Lichtquellen ist in entgegengesetzte Verlaufsrichtungen der Strecke in den jeweiligen Lichtleitern führbar. Mit anderen Worten befinden sich die nebeneinander angeordneten Endbereich der Lichtleiter zwischen den beiden Lichtquellen in einem Bereich, der von beiden Lichtquellen verhältnismäßig weit entfernt ist. Während bei jedem einzelnen der Lichtleiter in dessen Endbereich dadurch die ausgestrahlte Lichtmenge im Vergleich zu einem Bereich nahe der jeweiligen Lichtquelle geringer sein kann, kann durch die nebeneinander angeordneten Endbereiche der beiden Lichtleiter zusammen auch in den Endbereichen durch die Überlagerung des von den beiden Endbereichen abgestrahlten Lichts dieselbe Helligkeit erzeugt werden wie in den übrigen Abschnitten der Strecke.

Gemäß einer anderen Weiterbildung der erfindungsgemäßen Beleuchtungsvorrichtung sind die beiden Lichtleiter in einer zumindest teilweise transparenten Aufnahmeeinrichtung angeordnet, welche sich entlang der beiden Abschnitte erstreckt. Dabei ist eine Relativbewegung der Lichtleiter bezüglich der Aufnahmeeinrichtung in eine Verlaufsrichtung der Strecke ermöglicht. Die Wände der Lichtleiter können also in Verlaufsrichtung der Strecke an einer Innenwandung der Aufnahmeeinrichtung entlang gleiten. Die Aufnahmeeinrichtung ermöglicht es, eine geschlossene Oberfläche bereitzustellen, die sich entlang der Strecke, also z.B. entlang einer Kontur, erstreckt und die mittels der Lichtleiter gleichmäßig hell von Innen erleuchtet wird. Die Aufnahmeeinrichtung kann dabei aus einem Material gefertigt sein, das im Verhältnis zu dem Material der Lichtleiter einen kleineren Wärmedehnungskoeffizienten aufweist. So kann sichergestellt werden, dass Spaltmaße zwischen der Aufnahmeeinrichtung und umgebenden Bauteilen einen vorgebbaren Grenzwert nicht überschreiten. Die oftmals mit einem verringerten Wärmedehnungskoeffizienten einhergehende geringere Lichtleitfähigkeit des Materials der Aufnahmeeinrichtung spielt hierbei keine wesentliche Rolle, da die Lichtleitung von den Lichtquellen zu den einzelnen Lichtaustrittsstellen größtenteils über die Lichtleiter erfolgt. Diese können sich in der Aufnahmeeinrichtung aufgrund der beschriebenen Lagerung ungehindert ausdehnen.

Bei einer weiteren Ausführungsform der erfindungsgemäßen Beleuchtungs-vorrichtung ist wenigstens der erste Lichtleiter L-förmig ausgestaltet. Dabei ist ein Einkoppelbereich für das Licht der ersten Lichtquelle in den ersten Lichtleiter in dem Knick der L-Form angeordnet. Diese Ausführungsform weist den Vorteil auf, dass ein gleichmäßig heller Leuchtstreifen für eine rechteckige Kontur erzeugt werden kann. Bevorzugt sind beide Lichtleiter in der beschriebenen Weise L-förmig ausgestaltet. Die Anordnung des Einkoppelbereichs im Knick der L-Form weist den Vorteil auf, dass der Leuchtstreifen im Einkoppelbericht nicht heller erscheint. Eine andere Ausführungsform sieht vor, dass wenigstens bei dem ersten Lichtleiter mehr als eine Lichtquelle verwendet wird. Dabei ist mittels des ersten Lichtleiters das Licht der weiteren Lichtquelle entlang eines dritten Abschnitts der Strecke bis zu einem weiteren Endbereich des ersten Lichtleiters verteilbar. Hierdurch wird ermöglicht, dass der Lichtleiter auch einen stark gekrümmten oder geknickten Bereich aufweisen kann, der dennoch gleichmäßig hell erscheint. Die mittels des ersten Lichtleiters ausleuchtbaren Abschnitte der Strecke, d.h. der erste und dritte Abschnitt, sind dabei bevorzugt gerade, während die Lichtquellen in dem gekrümmten oder geknickten Bereich angeordnet sind.

Ein weiterer Aspekt der Erfindung betrifft einen Kraftwagen, der wenigstens eine Beleuchtungsvorrichtung aufweist, die einer Ausführungsform der erfindungsgemäßen Beleuchtungsvorrichtung entspricht. Dieser Kraftwagen weist den Vorteil auf, dass auch Konturen großer Funktionselemente, wie z.B. ein Bedienfeld eines Armaturenbretts, eine Zugangsöffnung für ein Handschuhfach oder ein Handgriff für eine Tür, mittels eines gleichmäßig hellen Leuchtstreifens im Dunkeln erkennbar gemacht werden können. Die wenigstens eine Beleuchtungsvorrichtung kann dabei großen Temperaturschwankungen ausgesetzt sein, ohne dass die Lichtleiter hierdurch beschädigt werden oder sich die Beleuchtungsvorrichtung derart verformt, dass ein Spalt zwischen der Beleuchtungsvorrichtung und einem Bauteil, von welchem sie eingefasst ist, entsteht.

Insbesondere kann bei dem erfindungsgemäßen Kraftwagen von der wenigstens einen Beleuchtungsvorrichtung eine verschließbare Öffnung umgeben sein. Beispielsweise kann dann ein Türrahmen illuminiert werden, wodurch vermieden werden kann, dass ein Passgier sich beim Ein- oder Aussteigen den Kopf stößt. Bevorzugt ist die wenigstens eine Beleuchtungsvorrichtung in einem Rahmen einer Schiebedachöffnung angeordnet.

Bei dem erfindungsgemäßen Kraftwagen kann eine gleichmäßig helle Beleuchtung entlang einer eckigen Kontur besonders einfach bereitgestellt werden, indem die Lichtquellen der wenigstens einen Beleuchtungsvorrichtung in einem jeweiligen Eckbereich der zu beleuchtenden Strecke und die Endbereiche in einem geradlinigen Abschnitt der Strecke angeordnet sind. Hierdurch ergibt sich der Vorteil, dass die Lichtquellen und die Einkoppelbereiche der Lichtleiter fest in dem Kraftwagen angeordnet werde können, was eine besonders einfache Bauweise der wenigstens einen Beleuchtungsvorrichtung ermöglicht.

Die Erfindung wird im Folgenden anhand eines Ausführungsbeispiels näher erläutert. Das zeigt:
- Fig. 1: eine schematische Darstellung einer Beleuchtungsvorrichtung für ein Schiebedach eines Personenkraftwagens, der eine Ausführungsform des erfindungsgemäßen Kraftwagens darstellt,
- Fig. 2: einen vergrößerten Ausschnitt aus der Darstellung von Fig. 1, und
- Fig. 3: eine schematische Darstellung eines Querschnitts einer der Beleuchtungsvorrichtungen von Fig. 1.

Das Beispiel stellt eine bevorzugte Ausführungsform der Erfindung dar.

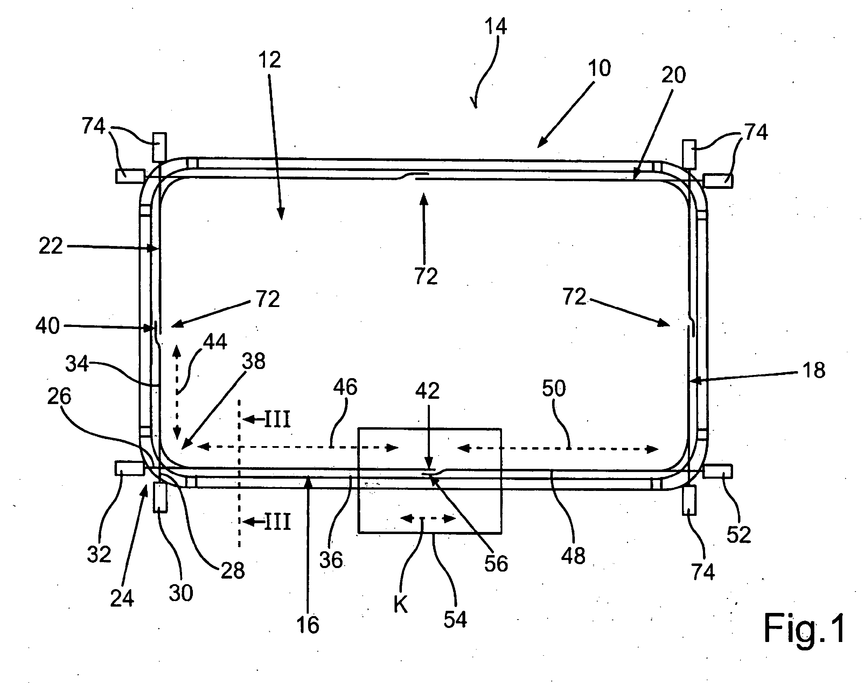

In Fig. 1 ist ein Rahmen 10 gezeigt, der eine Dachöffnung 12 in einem Dach eines (nicht weiter dargestellten) Personenkraftwagens umgibt. Die Dachöffnung 12 kann von einem (nicht dargestellten) Schiebedach verschlossen werden. Fig. 1 zeigt den Rahmen 10 vom Inneren des Fahrzeugs aus mit Blickrichtung nach oben, d.h. in Fahrzeughochrichtung. Der Rahmen 10 ist von einem Dachhimmel 14 umgeben. Entlang einer Oberfläche des Rahmens 10 verläuft ein leuchtender Streifen, der für eine in einem Innenraum des Personenkraftwagens befindlichen Person im Dunkeln eine Kontur der Dachöffnung 12 erkennbar macht. Der Leuchtstreifen umgibt die Dachöffnung 12 vollständig und weist entlang seines Verlaufs lediglich so geringe Unterschiede in der Helligkeit auf, dass die Person diese nicht erkennen kann.

Zum Erzeugen des Leuchtstreifens befinden sich in einem Inneren des Rahmens 10 vier Lichtleiter 16, 18, 20, 22. Die Lichtleiter 16 bis 22 sind jeweils L-förmig ausgestaltet. Die Lichtleiter 16 bis 22 weisen die gleiche Bauweise auf. Der Einfachheit halber ist im Folgenden deshalb nur der Lichtleiter 16 beschrieben.

Der Lichtleiter 16 weist in einem Knick 24 seiner L-Form zwei Einkoppelbereiche 26, 28 auf, von denen jeder in ein Einkoppelelement 30, 32 gesteckt ist. Jedes der Einkoppelelemente 30, 32 weist in seinem Inneren ein

Leuchtmittel auf, dessen Licht im Einkoppelbereich 26 bzw. 28 in den Lichtleiter 16 gelangt. Als Leuchtmittel können die Einkoppelelemente 30, 32 jeweils z. B. eine oder mehrere Leuchtdioden aufweisen. Das in dem Einkoppelelement 30 erzeugte Licht breitet sich in dem Lichtleiter 16 zu einem überwiegenden Teil entlang eines Schenkels 34 der L-Form und das Licht des Einkoppelelements 32 entsprechend entlang eines Schenkels 36 der L-Form aus. In einem gekrümmten Bereich 38 des Lichtleiters 16 überlagert sich das Licht beider Einkoppelelemente 30, 32.

Entlang der Schenkel 34, 36 und in dem gekrümmten Bereich 38 treten an Streuzentren des Lichtleiters 16 jeweils Teile des Lichts aus dem Lichtleiter 16 aus und gelangen in den Innenraum des Personenkraftwagens. Die Streuzentren können beispielsweise durch einzelne Kerben einer gezackten Außenwandung des Lichtleiters 16 gebildet sein. Die Streuzentren sind dabei so ausgestaltet, dass die pro Streckenabschnitt entlang der Schenkel 34 und 36 austretende Lichtmenge bis zu einem jeweiligen Endbereich 40, 42 der Schenkel 34 bzw. 36 nahezu gleich ist. Durch den Schenkel 34 wird hierdurch ein Abschnitt 44 der Kontur der Dachöffnung 12, durch den Schenkel 36 ein Abschnitt 46 der Kontur erleuchtet.

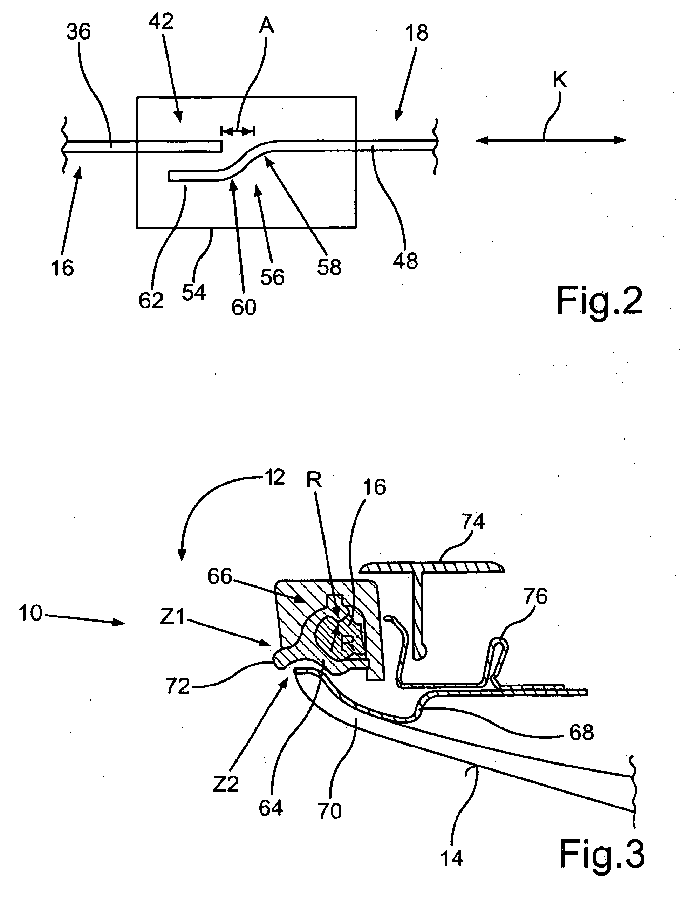

Durch einen Schenkel 48 des Lichtleiters 18 wird ein weiterer Abschnitt 50 der Kontur mit Licht erhellt, welches in einem Einkoppelelement 52 erzeugt wird. Der Endbereich 42 des Schenkels 36 und der Endbereich 56 des Schenkels 48 überlappen sich entlang einer Verlaufsrichtung K der Kontur in einem Übergangsbereich 54. Zur besseren Veranschaulichung ist der Übergangsbereich 54 in Fig. 2 noch einmal vergrößert dargestellt. Obwohl der Endbereich 42 den vom Einkoppelelement 32 am weitesten entfernten Teil des Schenkels 36 darstellt, und entsprechend auch der Endbereich 56 den von dem Einkoppelelement 52 am weitesten entfernten Teil des Schenkels 48, nimmt die Person zwischen der Helligkeit des Leuchtstreifens in den Abschnitten 46 und 50 einerseits und in dem Übergangsbereich 54 andererseits keinen Unterschied wahr. Durch die Überlappung der Endbereiche 42 und 56 überlagert sich das aus ihnen austretende Licht, wodurch sich eine Gesamthelligkeit des Leuchtstreifens in dem Übergangsbereich 54 ergibt, die der Helligkeit des Leuchtstreifens in den Abschnitten 46 und 50 entspricht.

Die Endbereiche 42 und 56 sind derart überlagert, dass sie in der Verlaufsrichtung K in einem Abstand A zueinander beabstandet sind. Der Abstand A kann hier bei einer Temperatur von 20°C beispielsweise 20 mm betragen. Wenn die Schenkel 36 und 48 auf eine Temperatur größer als 20°C erwärmt werden, verringert der Abstand A. Bei einer Temperatur der Schenkel 36 und 48 unterhalb von 20°C ist der Abstand A entsprechend größer.

Die Schenkel 36 und 48 sind koaxial zueinander angeordnet. Die Überlagerung der Endbereiche 42 und 56, d. h. das Anordnen der beiden Endbereiche 42 und 56 nebeneinander, ist durch eine gekröpfte Form des Endbereichs 56 ermöglicht. Der Endbereich 56 weist zwei Krümmungen 58, 60 auf, durch welche sich ein achsparalleler Versatz zwischen dem Schenkel 48 und einem Endstück 62 ergibt. Das Endstück 62 befindet sich in Verlaufsrichtung K dabei neben dem Endstück 42.

Bei einer Längenänderung der Schenkel 34 und 36 des Lichtleiters 16 bleibt eine Lage der Einkoppelbereiche 26 und 28 und auch der Einkoppelelemente 30 und 32 bezüglich des Rahmens 10 unverändert. Dazu ist der Lichtleiter 16 im Bereich seines Knicks 24 fest mit dem Rahmen 10 verbunden. Die Endbereiche 40 und 42 sind dagegen entlang der Verlaufsrichtung der Kontur verschiebbar.

Diese Loslagerung der Schenkel 34 und 36 des Lichtleiters 16 in dem Rahmen 10 ist im Folgenden anhand von Fig. 3 näher erläutert, die ein Schnittansicht des Rahmens 10 entlang einer in FIG 1 angedeuteten Schnittlinie zeigt. Der Lichtleiter 16 ist in einem transparenten Streukörper 64 gelagert. Der Streukörper 64 weist eine rechteckige Grundform auf, welche der Form des Rahmens 10 entspricht. Der Streukörper 64 umgibt die Dachöffnung 12 dabei vollständig. Er kann einstückig ausgebildet sein.

Der Lichtleiter 16 ist in dem Streukörper 64 durch eine Schnappverbindung gehalten, die durch einen Rastbereich R des Streukörpers 64 ermöglicht ist, der in eine entsprechende Aussparung R' des Lichtleiters 16 eingreift. Durch den Eingriff des Rastbereichs R in die Aussparung R' und einen insgesamt unregelmäßig geformten Querschnitt des Schenkels 36 kann sich dieser nicht um seine Längsachse bezüglich des Streukörpers 64 verdrehen. Hierdurch bleiben seine Streuzentren stets in der gleichen Lage in dem Streukörper ausgerichtet. Entlang der Verlaufsrichtung K der Kontur ist der Schenkel 36 nicht fixiert.

Der Streukörper 64 ist zwischen einer Leiste 66 des Rahmens 10 und einem Spannelement 68 des Rahmens 10 eingebaut. Bei der Leiste 66 kann es sich um eine Kronenleiste handeln, die z.B. aus einem Hartgummi oder einer Metalllegierung bestehen kann. Durch das Spannelement 68 wird ein Dekorstoff 70 des Himmels 14 gehalten. Der Streukörper 64 kann mit der Leiste 66 und auch mit dem Spannelement 68, z.B. durch eine Klebeverbindung, fest verbunden sein. Das Spannelement 68 kann z.B. aus Kunststoff oder Pressspan gefertigt sein. Ein Spaltmaß Z1 zwischen einem Fortsatz 72 des Streukörpers 64, über welchen Licht, das aus dem Lichtleiter 16 in den Streukörper 64 eintritt, in den Innenraum des Personenkraftwagens gelangt, und der Leiste 66 ändert sich mit der Temperatur nur so unwesentlich, dass es ein Benutzer des Personenkraftwagens nicht wahrnimmt. Das gleiche ist bei einem Spaltmaß Z2 zwischen dem Fortsatz 72 und dem Spannelement 68 der Fall. Die geringe Änderung der Spaltmaße Z1 und Z2 ergibt sich durch einen entsprechend geringen Wärmeausdehnungskoeffizienten des Materials, aus welchem der Streukörper 64 hergestellt ist. Die Leiste 66 wird in dem Beispiel von einem Verbindungselement 74 mittels einer Klipsverbindung an einem Blech des Daches 14 gehalten. Eine Klammer 76 fixiert die Leiste 66 bezüglich des Verbindungselements 74.

Der in dem Streukörper 64 gelagerte Lichtleiter 16 weist eine größere Lichtleitfähigkeit auf als der Streukörper 64. Dazu ist der Lichtleiter 16 aus einem entsprechenden Material gefertigt. Der Lichtleiter kann hier aus Polymethylmethacrylat (PMMA) oder einem Polycarbonat (PC) gefertigt sein. Das Material der Lichtleiters 16 kann allerdings einen größeren Wärmekoeffizienten aufweisen als dasjenige des Streukörpers 64. Wenn sich der Lichtleiter 16 durch eine Änderung der Raumtemperatur in seiner Länge verändert, gleitet der Schenkel 36 dann in dem Streukörper 64 entlang der Verlaufsrichtung K.

Die vorangegangenen Erläuterungen gelten selbstverständlich wegen der gleichartigen Bauweise entsprechend auch für die übrigen Lichtleiter 18, 20 und 22. Zusätzlich zu dem Übergangsbereich 54 ergeben sich durch die vier L-förmigen Lichtleiter 16 bis 22 noch drei weitere Übergangsbereiche 72. Die Übergangsbereiche 54, 72 sind jeweils in einer Mitte einer geradlinig verlaufenden Kante der rechteckigen Kontur der Dachöffnung 12 angeordnet. Die Endbereiche der jeweiligen Schenkel der Lichtleiter sind dort ebenfalls in der beschriebenen Art paarweise in Verlaufsrichtung der Kontur nebeneinander angeordnet. Zusätzlich zu den bereits erwähnen Einkoppelelementen 30, 32 und 52 wird Licht noch durch weitere Einkoppelelemente 74 in die Lichtleiter eingespeist.

Durch das Beispiel ist gezeigt, wie eine umlaufende Beleuchtung eines großflächigen Bauteils, hier eines Schiebedachs, ohne sichtbare Unterbrechung mittels der Erfindung ermöglicht werden kann. Es werden vier Lichtleiter verwendet, die über Kreuz an den Ecken des Schiebedachs mit Leuchtdioden beleuchtet werden. Die Ecken des Schiebedachausschnitts im Himmel bilden die Festlager der Lichtleiter. Die Loslager bilden die überlappenden Enden der Lichtleiter, die einen Toleranzausgleich zulassen. Die Lichtleiter sind aus gewöhnlichem, Licht leitendem Material hergestellt und verlaufen in einem umgreifenden Streukörper. Dieser wird von einer Leiste des Schiebedachrahmens gehalten. Der Streukörper beinhaltet die sichtbare Oberfläche für die Personen im Fahrzeuginneren und kann somit nur mit geringem Maß mechanisch vom Himmel entkoppelt werden, weil keine Teilung möglich ist. Das Material des Streukörpers kann bei der Erfindung so gewählt werden, dass es einen besseren Wärmeausdehnungskoeffizienten aufweist als der in seinem Inneren befindliche Lichtleiter. Dehnen sich die Lichtleiter durch die Wärme aus, können sie sich längst in dem Streukörper bewegen. Die Einkoppelelemente können ebenfalls schwimmend gelagert sein.

## Patentansprüche

1. Beleuchtungsvorrichtung (10) zum Erzeugen eines Leuchtstreifens entlang einer vorgegebenen Strecke in einem Innenraum eines Kraftwagens, wobei zum Verteilen von Licht entlang zweier unterschiedlicher Abschnitte (46, 50) der Strecke jeweils ein Lichtleiter (16, 18) vorgesehen ist und wobei sich jeweilige Endbereiche (42, 56) der Lichtleiter (16, 18) zwischen zwei Lichtquellen (32, 52) befinden und Licht der ersten Lichtquelle (32) entlang des ersten Abschnitts (46) der Strecke mittels des ersten Lichtleiters (16) bis zu dessen Endbereich (42) in eine Verlaufsrichtung (K) der Strecke und Licht der zweiten Lichtquelle (52) entlang des zweiten Abschnitts (50) der Strecke mittels des zweiten Lichtleiters (18) bis zu dessen Endbereich (56) entgegengesetzt zur Verlaufsrichtung verteilbar ist und wobei die beiden Endbereiche (42, 56) der Lichtleiter in Verlaufsrichtung (K) der Strecke gegeneinander beweglich gelagert sind,
**dadurch gekennzeichnet, dass**
sich die Lichtleiter an ihren Enden entlang des Verlaufs der Strecke mit ihren jeweiligen Endbereichen (42, 56) überschneiden und hierbei die beiden Endbereiche (42, 56) entlang der Strecke nebeneinander angeordnet sind, indem einer der Lichtleiter (16, 18) in seinem Endbereich (40, 56) eine gekröpfte Form aufweist.

2. Beleuchtungsvorrichtung (10) nach Anspruch 1,
**dadurch gekennzeichnet, dass**
die beiden Lichtleiter (16, 18) in einer zumindest teilweise transparenten Aufnahmeeinrichtung (64) angeordnet sind, welche sich entlang der beiden Abschnitte (46, 50) erstreckt, und hierbei eine Relativbewegung der Lichtleiter (16, 18) bezüglich der Aufnahmeeinrichtung (64) in eine Verlaufsrichtung (K) der Strecke ermöglicht ist.

3. Beleuchtungsvorrichtung (10) nach einem der Ansprüche 1 oder 2,
**dadurch gekennzeichnet, dass**
wenigstens der erste Lichtleiter (16 bis 22) L-förmig ausgestaltet ist und hierbei ein Einkoppelbereich (28, 32) für das Licht der ersten Lichtquelle (30, 32) in den ersten Lichtleiter (16) in dem Knick (24) der L-Form angeordnet ist.

4. Beleuchtungsvorrichtung (10) nach einem der vorhergehenden Ansprüche,
**dadurch gekennzeichnet, dass**
bei dem ersten Lichtleiter (16 bis 24) das Licht einer weiteren Lichtquelle (30) entlang eines dritten Abschnitts (44) der Strecke bis zu einem weiteren Endbereich (40) des ersten Lichtleiters (16) verteilbar ist.

5. Kraftwagen, welcher wenigstens eine Beleuchtungsvorrichtung (10) gemäß einem der vorhergehenden Ansprüche aufweist.

6. Kraftwagen nach Anspruch 5, bei welchem von der wenigstens einen Beleuchtungsvorrichtung (10) eine verschließbare Öffnung (12) umgeben ist.

7. Kraftwagen nach Anspruch 5 oder 6, bei welchem die wenigstens eine Beleuchtungsvorrichtung (10) in einer Fassung für ein Schiebedach angeordnet ist.

8. Kraftwagen nach einem der Ansprüche 5 bis 7, bei welchem die Lichtquellen (30, 32, 52, 74) der wenigstens einen Beleuchtungsvorrichtung (10) in einem jeweiligen Eckbereich (38) der zu beleuchtenden Strecke und die Endbereiche (42, 40, 56) in einem geradlinigen Abschnitt der Strecke angeordnet sind.

## Claims

1. An illuminating device (10) for generating a light strip along a predetermined path in an interior space of a motor vehicle, wherein in each case a light guide (16, 18) is provided for the distribution of light along two different sections of the path (46, 50) and wherein each end area (42, 56) of the light guide (16, 18) is located between two light sources (32, 52) and the first light source (32) can be distributed along the first section (46) of the path by means of the first light guide (16) up to its end area (42) in a course direction (K) of the path and light of the second light source (52) can be distributed along the second section (50) of the path by means of the second light guide (18) up to its end area (56) opposite to the course direction and wherein both end areas (42, 56) of the light guide are movably mounted against each other in the course direction (K) of the path,
**characterized in that**
the light guides overlap at their ends along the course of the path with their respective end areas (42 56) and in doing so both end areas (42, 56) are arranged along the path next to each other, while one of the light guides (16, 18) in its end area (40, 56) has an offset shape.

2. An illuminating device (10) according to claim 1,
**characterized in that**
both of the light guides (16, 18) are arranged in an at least partially transparent holding device (64), which extends along both sections (46, 50) and in this connection a relative movement of the light guides (16, 18) in respect to the holding device (64) is made possible in a course direction (K) of the path.

3. An illuminating device (10) according to one of claims 1 or 2,
**characterized in that**
at least the first light guide (16 to 22) is designed in an L-shape and in this connection a coupling-in area (28, 32) for the light of the first light source (30, 32) is arranged in the first light guide (16) in the bend (24) of the L-shape.

4. An illuminating device (10) according to one of the preceding claims,
**characterized in that**
in the case of the first light guide (16 to 24) the light of another light source (30) can be distributed along a third section (44) of the path up to another end area (40) of the first light guide (16).

5. A motor vehicle, which has at least one illuminating device (10) according to one of the preceding claims.

6. A motor vehicle according to claim 5, in which a closable opening (12) is surrounded by the at least one illuminating device (10).

7. A motor vehicle according to claim 5 or 6, in which the at least one illuminating device (10) is arranged in a holder for a sunroof.

8. A motor vehicle according to one of claims 5 to 7, in which the light sources (30, 32, 52, 74) of the at least one illuminating device (10) is arranged in a respective corner area (38) of the path to be illuminated and the end areas (42, 40, 56) in a linear section of the path.

## Revendications

1. Dispositif d'éclairage (10) servant à produire une bande lumineuse le long d'un trajet prédéfini dans un habitacle d'un véhicule à moteur, respectivement un guide de lumière (16, 18) étant prévu aux fins de la répartition de la lumière le long de deux tronçons (450, 501) différents du trajet et des zones d'extrémité (42, 56) respectives des guides de lumière (16, 18) se trouvant entre deux sources de lumière (32, 52) et la lumière de la première source de lumière (32) pouvant être répartie le long du premier tronçon (46) du trajet au moyen du premier guide de lumière (16) jusqu'à sa zone d'extrémité (42) dans une direction d'extension (K) du trajet et la lumière de la deuxième source de lumière (52) pouvant être répartie le long du deuxième tronçon (50) du trajet au moyen du deuxième guide de lumière (18) jusqu'à sa zone d'extrémité (56) dans le sens opposé à la direction d'extension, et les deux zones d'extrémité (42, 56) des guides de lumière étant montées de manière mobile l'une par rapport à l'autre dans le sens d'extension (K) du trajet,
**caractérisé en ce**
**que** les guides de lumière s'entrecoupent au niveau de leurs extrémités le long du tracé du trajet par leurs zones d'extrémité (42, 56) respectives, et en ce que les deux zones d'extrémité (42, 56) sont disposées l'une à côté de l'autre le long du tracé en ce que l'un des guides d'ondes (16, 18) présente, dans sa zone d'extrémité (40, 56), une forme coudée.

2. Dispositif d'éclairage (10) selon la revendication 1,
**caractérisé en ce**
**que** les deux guides d'ondes (16, 18) sont disposés dans un système de réception (64) au moins en partie transparent, lequel s'étend le long des deux tronçons (46, 50), permettant ce faisant un déplacement relatif des guides d'ondes (16, 18) par rapport au système de réception (64) dans une direction d'extension (K) du trajet.

3. Dispositif d'éclairage (10) selon l'une quelconque des revendications 1 ou 2,
**caractérisé en ce**
**qu'**au moins le premier guide d'ondes (16 à 22) est configuré en forme de L, et en ce que ce faisant une zone d'injection (28, 32) de lumière de la première source de lumière (30, 32) est disposée dans le premier guide de lumière (16) dans le pli (24) de la forme en L.

4. Dispositif d'éclairage (10) selon l'une quelconque des revendications précédentes,
**caractérisé en ce**
**que** dans le premier guide de lumière (16 à 24), la lumière d'une autre source de lumière (30) peut être répartie le long d'un troisième tronçon (44) du trajet jusqu'à une autre zone d'extrémité (40) du premier guide de lumière (16).

5. Véhicule à moteur, qui présente au moins un dispositif d'éclairage (10) selon l'une quelconque des revendications précédentes.

6. Véhicule à moteur selon la revendication 5, une ouverture (12) pouvant être fermée étant entourée par le dispositif d'éclairage (10) au moins au nombre de un.

7. Véhicule à moteur selon la revendication 5 ou 6, le dispositif d'éclairage (10) au moins au nombre de un étant disposé dans un châssis destiné à un toit coulissant.

8. Véhicule à moteur selon l'une quelconque des revendications 5 à 7, les sources de lumière (30, 32, 52, 74) du dispositif d'éclairage (10) au moins au nombre de un étant disposées dans une zone d'angle (38) respective du trajet à éclairer et les zones d'extrémité (42, 40, 56) étant disposées dans un tronçon rectiligne du trajet.
